(19) Europäisches Patentamt
European Patent Office
Office européen des brevets

(11) Veröffentlichungsnummer: **0 509 212 B1**

(12) **EUROPÄISCHE PATENTSCHRIFT**

(45) Veröffentlichungstag der Patentschrift: **12.07.95**

(51) Int. Cl.$^{6}$: **F16L 9/133**, F16L 9/12

(21) Anmeldenummer: **92102810.6**

(22) Anmeldetag: **20.02.92**

# (54) Mehrschichtiges Kunststoffrohr.

(30) Priorität: **18.04.91 DE 4112662**

(43) Veröffentlichungstag der Anmeldung:
**21.10.92 Patentblatt 92/43**

(45) Bekanntmachung des Hinweises auf die Patenterteilung:
**12.07.95 Patentblatt 95/28**

(84) Benannte Vertragsstaaten:
**DE ES FR GB IT NL SE**

(56) Entgegenhaltungen:
**DE-C- 3 827 092**

**PATENT ABSTRACTS OF JAPAN vol. 9, no. 21 (C-263) 29. Januar 1985 & JP-A-59 168 059 (TOYO BOSEKI KK)**

(73) Patentinhaber: **HÜLS AKTIENGESELLSCHAFT**

**D-45764 Marl (DE)**

(72) Erfinder: **Mügge, Joachim, Dr.**
**Kantstrasse 14**
**W-4358 Haltern (DE)**
Erfinder: **Ohm, Hubertus, Dr.**
**Sixtusstrasse 8**
**W-4358 Haltern (DE)**
Erfinder: **Herrmann, Hans-Dieter**
**Pommernstrasse 9**
**W-4370 Marl (DE)**
Erfinder: **Ries, Hans, Dr.**
**Griesheimer Strasse 18**
**W-4370 Marl (DE)**

**EP 0 509 212 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein mehrschichtiges Kunststoffrohr bestehend aus einer Innen- und Außenschicht auf Basis von Polyamid.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, beständig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. Zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395, 37 15 251, 38 21 723, 38 27 092). Die praktische Anwendung dieser Vorschläge hat jedoch gezeigt, daß zwar einzelne Nachteile vermieden werden konnten, daß aber das Gesamteigenschaftsbild immer noch nicht befriedigte. Insbesondere schlagen die DE-C-3 821 723 und die DE-A-3 510 395 mehrschichtige Kunststoffrohre vor, die aus einer Innen- und Außenschicht auf Basis von Polyamid bestehen. Innen- und Außenschicht werden durch mindestens eine Zwischenschicht kraftschlüssig miteinander verbunden, die aus einem Polydefin (DE-C-3 821 723) bzw. einem Polyvinylalkohol-Copolymerisat (DE-A-3 510 395) besteht.

Aufgabe der Erfindung war es, ein Polyamidrohr mit einer guten Sperrwirkung gegen das transportierte Medium, einer zufriedenstellenden Maßhaltigkeit sowie einer befriedigenden mechanischen Belastbarkeit zu entwickeln.

Die Aufgabe wurde gelöst, indem Innen- und Außenschicht des Rohres durch mindestens eine Zwischenschicht aus einem Gemisch eines linearen kristallinen Polyesters und eines Polyamids kraftschlüssig miteinander verbunden sind.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer $\alpha$, -Aminocarbonsäure bzw. von dem davon abgeleitetem Lactam ausgegangen worden ist - H. Domininghaus, "Die Kunststoffe und ihre Eigenschaften, Seite 272, VDI-Verlag (1976).)

Sofern Copolyamide verwendet werden, können diese z. B. Adipinsäure, Sebacinsäure, Korksäure, Isophthalsäure, Terephthalsäure als Cosäure bzw. Bis(4'-aminocyclohexyl)-methan, Trimethylhexamethylendiamin, Hexamethylendiamin als Codiamin enthalten.

Die Herstellung dieser Polyamide ist bekannt (z. B. D. B. Jacobs, J. Zimmermann, Polymerization Processes, S. 424-67; Interscience Publishers, New York (1977); DE-AS 2 152 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, Encyclopedia of Chemical Technology, 3. Aufl., Vol. 18, Seite 328 und 435 - Wiley & Sons (1982) beschrieben werden.

Sofern erforderlich können die Polyamide schlagzäh eingestellt werden. Als schlagzähmachende Komponente kommen hierfür bekannte Produkte wie Ethylen/Propylen- bzw. Ethylen/Propylen/Dien-Copolymerisate (z. B. EP-OS 0 295 076); statistisch oder blockartig aufgebaute Copolymerisate aus alkenylaromatischen Verbindungen mit aliphatischen Olefinen oder Dienen (z. B. EP-OS 0 261 748); Kautschuktypen mit einem Kern/Schale-Aufbau auf Basis von (Meth)Acrylestern, Styrol, Butadien o. ä. (z. B. DE-OSS 37 28 685, 21 44 528) in Frage, die gegebenenfalls dem Stand der Technik entsprechend funktionalisiert sein können.

Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität ($\eta$ rel) im Bereich von 1,5 bis 2,8.

Die genannten Polyamide werden für sich oder in Gemischen eingesetzt.

Die linearen kristallinen Polyester weisen nachstehende Grundstruktur auf

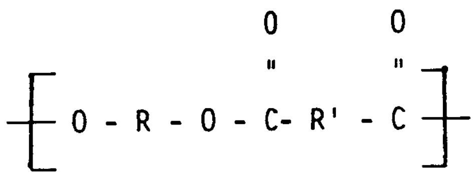

;

dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel

$$HO \left[ R'' - O \right]_x H \, ,$$

wobei R" einen zweiwertigen Rest mit 2 bis 4 C-Atomen bedeutet und x ein Wert von 2 bis 50 annehmen kann, ersetzt sein.

Bevorzugt als Diole werden Ethylenglycol und Tetramethylenglycol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung von linearen, kristallinen Polyestern gehört zum Stand der Technik (DE-OSS 24 07 155, 24 07 156; Ullmanns Encyclopädie der technischen Chemie, 4. Aufl., Bd. 19, Seite 65 ff. - Verlag Chemie GmbH, Weinheim, 1980).

Die Herstellung der für die erfindungsgemäße Zwischenschicht bestimmten Massen aus Polyamid und Polyester kann durch Mischen in bekannter Weise erfolgen. Diese Mischung kann auch in dem Sinne weiterverarbeitet werden, daß das Granulatgemisch z. B. in einem Extruder aufgeschmolzen, gemischt und erneut granuliert wird. Es ist aber auch möglich, eine solche Schmelzemischung zusätzlich mit Katalysatoren zu versehen und zu Copolykondensaten in bekannter Weise umzusetzen (z. B. DE-AS 19 40 660; DE-OS 23 08 572; EP-OS 84 643).

Polyester und Polyamide werden in der Zwischenschicht in einem Gewichtsverhältnis im Bereich von 30 bis 70 : 70 bis 30, vorzugsweise 40 bis 60 : 60 bis 40 zueinander eingesetzt.

Den Polyamid- bzw. Polyestermassen können übliche Hilfs- und Zusatzstoffe wie z. B. Stabilisatoren, Verarbeitungshilfsmittel, Viskositätsverbesserer, Pigmente usw. zugefügt werden.

Den für die Rohranwendung bestimmten Polyamiden können noch Verstärkungs-bzw. Füllstoffe wie z. B. Glasfasern oder -kugeln, Kohle- oder Mineralfasern zugesetzt werden.

Die Herstellung der mehrschichtigen Kunststoffrohre erfolgt in bekannter, wie z. B. weiter oben im Stand der Technik beschriebenen Weise.

Die erfindungsgemäßen mehrschichtigen Kunststoffrohre weisen in hervorragendem Maße eine gute Beständigkeit sowie gute Sperrwirkung gegen Diffusion gegenüber den transportierten Medien, insbesondere chemischen Agenzien, Lösemitteln und Kraftstoffen auf. Ferner sind die beiden Polyamidschichten durch die Zwischenschicht so kraftschlüssig miteinander verbunden, daß z. B. bei thermischer Ausdehnung oder Biegen des Rohres kein Abscheren der verschiedenen Schichten voneinander auftritt. Neben einem 3-Schichtrohr können auch Rohre hergestellt werden, die aus z. B. 5 oder 7 Schichten bestehen, indem weitere Schichten aus Polyamid bzw. aus Polyamid/Polyester eingearbeitet werden.

Die in den Beispielen aufgeführten Ergebnisse wurden mit Hilfe nachstehender Meßverfahren bestimmt.

Die **Bestimmung der Lösungsviskosität** (Viskositätszahl J) der Polyester erfolgt unter Verwendung einer 0,5 Gew.-%igen Lösung in einem o-Dichlorbenzol/Phenol-Gemisch (50 : 50 Gewichtsteile) bei 25 °C gemäß DIN 53 728.

Die **Bestimmung der Lösungsviskosität** (rel. Viskosität $_{rel}$) der Polyamide erfolgt unter Verwendung einer 0,5 Gew.-%igen Kresol-Lösung bei 25 °C gemäß DIN 53 727.

Die **Bestimmung der Diffusion** von Kraftstoffanteilen erfolgt an Folien, indem 50 ml eines Kraftstoffgemisches (Kraftstoff M 15 - 42,5 Vol.Tle. Isooctan, 42,5 Vol.Tle. Toluol und 15 Vol.Tle. Methanol) in ein zylindrisches Gefäß (Ø 5 cm, Höhe 3 cm) gefüllt werden, das dicht mit der zu prüfenden Folie verschlossen ist. Die Diffusion wird bei 23 ±1 °C als Masseverlust durch Diffusion über die Zeit (Messung alle 24 h) ermittelt. Als Maß wird der höchste, pro Fläche registrierte Masseverlust angegeben.

Die **Bestimmung der Kraftschlüssigkeit** zwischen den einzelnen Schichten wird anhand von mehrschichtigen Rohren bzw. Folien vorgenommen. Dabei wird versucht, die Schichten manuell voneinander zu trennen, d. h. durch Knicken der Rohre bzw. Folien mit anschließendem Ablöseversuch mit einem Schneidwerkzeug und Gitterschnitt. Rohre und Folien werden dann als "gut" eingestuft, wenn keine Ablösung zwischen den Schichten erfolgt. Eine Ablösung innerhalb einer Schicht führt zu der gleichen Einstufung. Als "schlecht" werden Rohre und Folien bezeichnet, bei denen eine Ablösung zwischen zwei Schichten erfolgt.-

Mit Buchstaben gekennzeichnete Versuche sind nicht erfindungsgemäß.

## Beispiele

### Eingesetzte Polykondensate

Polyamidkomponenten für die Innen- und Außenschicht

- PA 1: Polyamid 12 ( $_{rel}$ 1.9; Gehalt an Amino-Endgruppen 80 mmol/kg)
- PA 2: Polyamid 12 (VESTAMID L 2140; $_{rel}$ 2.1)
- PA 3: Polyamid 12 (VESTAMID L 2124; $_{rel}$ 2.1, weichmacherhaltig)

Komponenten für die Zwischenschicht

- Z 1: 50 Gew.Tle. Polyamid 12 ( $_{rel}$: 1.91; Gehalt an Amino-Endgruppen: 80 mmol/kg; Gehalt an Carboxyl-Endgruppen: 20 mmol/kg), 50 Gew.Tle. Homo-Poly(butylenterephthalat) (Viskositätszahl J: 155 ml/g; Gehalt an Carboxylgruppen: 40 mmol/kg) und 0.1 Gew.Tle. Triphenylphosphit werden in einem gleichsinnig drehenden Zweiwellenkneter (Typ Leistritz 30.34 - Manteltemperatur: 260 °C; Massedurchsatz: 3 kg/h; Schneckendrehzahl: 50 $min^{-1}$) kontinuierlich schmelzegemischt, stranggepreßt und granuliert.
- Z 2: 50 Gew.Tle. Polyamid 12 ( $_{rel}$: 1.91; Gehalt an Amino-Endgruppen: 80 mmol/kg; Gehalt an Carboxyl-Endgruppen: 20 mmol/kg), 50 Gew.Tle. Homo-Poly(butylenterephthalat) (Viskositätszahl J: 155 ml/g; Gehalt an Carboxylgruppen: 40 mmol/kg) und 0.1 Gew.Tle. Dibutylzinnoxid werden in einem gleichsinnig drehenden Zweiwellenkneter (Typ Leistritz 30.34 - Manteltemperatur: 260 °C; Massedurchsatz: 3 kg/h; Schneckendrehzahl: 50 $min^{-1}$) kontinuierlich schmelzegemischt, stranggepreßt und granuliert.
- Z 3: 100 Gew.Tle. eines Homo-Polybutylenterephthalates mit überwiegend Hydroxylendgruppen (J: 105 ml/g; OH: 80 mmol/kg, COOH: 20 mmol/kg) werden mit 11 Gew.Tle. eines mehrfunktionellen handelsüblichen Isocyanates (IPDI T 1890 - Fa. HÜLS AG) in der Schmelze bei 250 °C umgesetzt und anschließend mit einem Polyamid 12 ($\eta_{rel}$: 1.91; Gehalt an Amino-Endgruppen: 80 mmol/kg; Gehalt an Carboxyl-Endgruppen 20 mmol/kg) umgeschmolzen, stranggepreßt und granuliert.
- Z4: Ethylenvinylalkohol-Copolymerisat, EVAL$^R$ EP-E 105A (Fa. KURARAI)
- Z5: Polyethylen, VESTOLEN$^R$ A 4042 (Fa. HÜLS AG)

### Herstellung von Folien und Rohren

Die Folien werden auf einer Labordreischichtfolienanlage mit einer 400 mm Dreischichtfoliendüse und einem nachgeschalteten Dreiwalzenglättwerk hergestellt. Die Extrudertemperatur bei der Herstellung der Folien wird auf 185 °C (PA 3); 200 °C (PA 1 und PA 2); 220 °C (Z 5); 225 °C (Z 4) und 245 °C (Z 1 bis Z 3) eingestellt.

Die Rohre mit den Abmessungen 8 mm (Außendurchmesser) x 1 mm (Gesamtwandstärke) und einem dreischichtigen Aufbau werden auf einer Laborrohrextrusionsanlage mit einem Fünfschichtrohrwerkzeug hergestellt (Außenschicht: ca. 0,75 mm, Zwischenschicht: ca. 0,15 mm, Innenschicht: ca. 0,1 mm). Die Speiseextruder weisen alle einen Schneckendurchmesser von 25 mm auf. Die Zylindertemperaturen lagen bei 220 °C (PA 3); 230 °C (PA 1, PA 2); 260 °C (Z 1 bis Z 3); 240 °C (Z 5); 200 °C (Z 4).

| Versuch | | Innenschicht | Zwischenschicht | Außenschicht | Kraftschlüssigkeit | Diffusion ($g \cdot d^{-1} \cdot m^{-2}$) |
|---|---|---|---|---|---|---|
| 1 | F*) | PA 1 | Z 1 | PA 1 | gut | 150 |
| 2 | F | PA 2 | Z 1 | PA 2 | gut | 155 |
| 3 | F | PA 3 | Z 2 | PA 1 | gut | 140 |
| 4 | F | PA 2 | Z 3 | PA 3 | gut | 170 |
| 5 | F | PA 3 | Z 1 | PA 3 | gut | 156 |
| 6 | R*) | PA 2 | Z 1 | PA 2 | gut | - |
| 7 | R | PA 3 | Z 3 | PA 3 | gut | - |
| A | F | PA 2 | Z 4 | PA 2 | schlecht | 190 |
| B | F | PA 3 | Z 5 | PA 1 | schlecht | 135 |
| C | R | PA 2 | Z 4 | PA 2 | schlecht | - |
| D | F | PA 3**) | - | - | - | 1240 |
| E | F | PA 2**) | - | - | - | 635 |

*) F = Mehrschichtfolie (Schichtdicke: ca. 0,1 mm)
R = Mehrschichtrohr

**) Einschichtfolie (Schichtdicke: ca. 0,1 mm)

## Patentansprüche

1. Mehrschichtiges Kunststoffrohr bestehend aus einer Innen- und Außenschicht auf Basis von Polyamid, wobei,

Innen- und Außenschicht durch mindestens eine Zwischenschicht aus einem Gemisch eines linearen kristallinen Polyesters und eines Polyamids kraftschlüssig miteinander verbunden sind.

2. Mehrschichtiges Kunststoffrohr nach Anspruch 1,
dadurch gekennzeichnet,
daß die Zwischenschicht aus einem Blend eines kristallinen Polyesters mit einem Polyamid besteht.

3. Mehrschichtiges Kunststoffrohr nach Anspruch 1,
dadurch gekennzeichnet,
daß die Zwischenschicht aus einem Polyester/Polyamid-Copolymeren besteht.

4. Mehrschichtiges Kunststoffrohr nach den Ansprüchen 1 bis 3,
dadurch gekennzeichnet,
daß die in der Zwischenschicht enthaltenen Polyester und Polyamide im Gewichtsverhältnis 30 bis 70 : 70 bis 30 zueinander eingesetzt werden.

5. Mehrschichtiges Kunststoffrohr nach den Ansprüchen 1 bis 3,
dadurch gekennzeichnet,
daß die in der Zwischenschicht enthaltenen Polyester und Polyamide im Gewichtsverhältnis 40 bis 60 : 60 bis 40 zueinander eingesetzt werden.

6. Mehrschichtiges Kunststoffrohr nach den Ansprüchen 1 bis 5,
dadurch gekennzeichnet,
daß der in der Zwischenschicht enthaltene Polyester durch (Poly)kondensieren von aliphatischen und/oder alicyclischen Diolen mit aromatischen Dicarbonsäuren erhalten worden ist.

7. Mehrschichtiges Kunststoffrohr nach den Ansprüchen 1 bis 5,
dadurch gekennzeichnet,
daß in der Zwischenschicht 4.6-, 6-, 6.6-, 6.12-, 8.10-, 10.10-, 10.12-, 11-, 12- und/oder 12.12-Polyamide enthalten sind.

8. Verwendung des mehrschichtigen Kunststoffrohres nach den Ansprüchen 1 bis 7 für den Stofftransport chemischer Agenzien.

9. Verwendung des mehrschichtigen Kunststoffrohres nach den Ansprüchen 1 bis 7 auf dem Kraftfahrzeugsektor.

**Claims**

1. A multilayer plastic pipe composed of an inner and outer layer based on polyamide, where inner and outer layers are firmly bonded to one another via at least one intermediate layer of a mixture of a linear crystalline polyester and a polyamide.

2. A multilayer plastic pipe according to Claim 1, characterized in that the intermediate layer is composed of a blend of a crystalline polyester with a polyamide.

3. A multilayer plastic pipe according to Claim 1, characterized in that the intermediate layer is composed of a polyester/polyamide copolymer.

4. A multilayer plastic pipe according to any of Claims 1 to 3, characterized in that the polyesters and polyamides present in the intermediate layer are used in a weight ratio to one another of 30 to 70 : 70 to 30.

5. A multilayer plastic pipe according to any of Claims 1 to 3, characterized in that the polyesters and polyamides present in the intermediate layer are used in a weight ratio to one another of 40 to 60 : 60 to 40.

6. A multilayer plastic pipe according to any of Claims 1 to 5, characterized in that the polyester present in the intermediate layer has been obtained by (poly)condensation of aliphatic and/or alicyclic diols with aromatic dicarboxylic acids.

7. A multilayer plastic pipe according to any of Claims 1 to 5, characterized in that the intermediate layer contains 4.6-, 6-, 6.6-, 6.12-, 8.10-, 10.10-, 10.12-, 11-, 12- and/or 12.12-polyamides.

8. Use of the multilayer plastic pipe according to any of Claims 1 to 7 for the material transport of chemical agents.

9. Use of the multilayer plastic pipe according to any of Claims 1 to 7 in the motor vehicle sector.

**Revendications**

1. Tube plastique multicouche constitué d'une couche intérieure et d'une couche extérieure à base de polyamide, où la couche intérieure et la couche extérieure sont liées l'une à l'autre par une liaison dynamique, par au moins une couche intermédiaire constituée d'un mélange d'un polyester cristallin linéaire et d'un polyamide.

2. Tube plastique multicouche selon la revendication 1,
caractérisé en ce que la couche intermédiaire est constituée d'un mélange d'un polyester cristallin et d'un polyamide.

3. Tube plastique multicouche selon la revendication 1,
caractérisé en ce que la couche intermédiaire est constituée d'un copolymère polyester/polyamide.

4. Tube plastique multicouche selon les revendications 1 à 3,
caractérisé en ce que le polyester et le polyamide contenus dans la couche intermédiaire sont utilisés selon un rapport pondéral réciproque de 30 à 70 : 70 à 30.

5. Tube plastique multicouche selon les revendications 1 à 3,
caractérisé en ce que le polyester et le polyamide contenus dans la couche intermédiaire sont utilisés selon un rapport pondéral réciproque de 40 à 60 : 60 à 40.

6. Tube plastique multicouche selon les revendications 1 à 5,
caractérisé en ce que le polyester contenu dans la couche intermédiaire a été obtenue par (poly)-condensation de diols aliphatiques et/ou alicycliques avec des acides dicarboxyliques aromatiques.

7. Tube plastique multicouche selon les revendications 1 à 5,
caractérisé en ce que la couche intermédiaire contient des polyamides 4.6, 6, 6.6, 6.12, 8.10, 10.10, 10.12, 11, 12 et/ou 12.12.

8. Utilisation du tube plastique multicouche selon les revendications 1 à 7 pour le transport d'agents chimiques.

9. Utilisation du tube plastique multicouche selon les revendications 1 à 7 dans le secteur des véhicules à moteur.